# EUROPEAN PATENT SPECIFICATION

(11) **EP 3 165 843 B1**
(45) Date of publication and mention of the grant of the patent: **25.08.2021**
(21) Application number: 14896450.5
(22) Date of filing: 04.07.2014
(51) Int. Cl.: F24F 11/30, F24F 3/147, F24F 12/00, F24F 11/83, F24F 110/20, F24F 110/12, F24F 110/22

(54) **VENTILATION DEVICE**
BELÜFTUNGSVORRICHTUNG
DISPOSITIF DE VENTILATION

(43) Date of publication of application: 10.05.2017
(73) Proprietor: Mitsubishi Electric Corporation, Chiyoda-ku Tokyo 100-8310 (JP)
(72) Inventor: YASUDA, Masami, Tokyo 100-8310 (JP); ARAI, Hidemoto, Tokyo 100-8310 (JP); SAITO, Fumio, Tokyo 100-8310 (JP); HASEGAWA, Masahiro, Tokyo 102-0073 (JP)
(74) Representative: Pfenning, Meinig & Partner mbB
(86) International application number: PCT/JP2014/067933
(87) International publication number: WO 2016/002072

(56) References cited:
- EP-A1- 2 650 617
- WO-A1-2012/077201
- JP-A- 2001 272 086
- JP-A- 2002 317 990
- JP-A- 2003 130 401
- JP-A- 2013 047 590
- None

## Description

### Field

The present invention relates to a ventilation device.

### Background

For example, as described in Patent Literature 1, there has conventionally been a humidification device provided with a control unit. When a high-humidity operation switch is turned on, the control unit performs a rapidly-humidifying operation to maintain the humidity focusing on a predetermined high-humidity range for a period of time set in advance by the timer. Thereafter, the control unit performs a high-humidity maintaining operation in which the humidity varies between the humidification stop threshold and the rehumidification threshold.

Further, as described in Patent Literature 2, there has been a humidification device including a sensor that detects the indoor temperature and the indoor humidity, and a water-vapor generation device for humidification.
The humidification device performs humidification according to the set mode of humidification amount.

Furthermore, as described in Patent Literature 3, there has been a ventilation air conditioning device including a temperature sensor that measures the outdoor-air temperature, a humidity sensor that measures the outdoor-air humidity, an air conditioning coil that heats the air to be supplied, and a control unit that controls the air conditioning coil based on the measurement results of the temperature sensor and the humidity sensor, in such a manner that the absolute humidity of the air to be supplied reaches a predetermined value.

### Citation List

### Patent Literatures

Patent Literature 1: Japanese Patent Application Laid-open No. 2005-37104
Patent Literature 2: Japanese Patent Application Laid-open No. 2000-46383
Patent Literature 3: International Publication No. 2012/077201

### Summary

### Technical Problem

However, in the technique described in Patent Literature 1, upon the start of operation, the humidification device operates for a given time as a rapidly-humidifying operation, and does not reduce the amount of humidification even when the indoor humidity reaches a set value. This results in an unnecessary humidifying operation. After the rapidly-humidifying operation, the humidity drastically varies between the humidification stop threshold and the rehumidification threshold. Therefore, the humidification device cannot maintain a constant humidity. It is difficult to stabilize the supply of air with a comfortable humidity.

In the technique described in Patent Literature 2, the humidification device determines the amount of humidification based on the indoor temperature and humidity information. The actual system that combines ventilation is more likely to cause a change in the indoor humidity due to a change in the outside-air humidity. This makes it difficult to maintain a constant humidity in the indoor environment, and therefore impairs the comfort.

In the technique described in Patent Literature 3, parameters for controlling the air conditioning coil are limited to the outside-air temperature and the outside-air humidity. For example, there is a case where at the start of operation, the humidity in the room is low, and it is therefore necessary to increase the amount of humidification. In that case, when limitations are imposed on the capacity of the air conditioning coil based on the outside-air temperature and humidity conditions, a considerable amount of time is required to bring the interior of the room into a comfortable humidity state. This impairs the comfort.

The present invention has been achieved to solve the above problems, and an object of the present invention is to provide a ventilation device that performs an operation that is less likely to cause a change in the indoor humidity by supplying an optimal amount of humidification to the air to be supplied at the time of introducing the outside air by ventilation.

### Solution to Problem

In order to solve the above-mentioned problems and achieve the object, according to an aspect of the present application, there is provided a ventilation device according to claim 1.

### Advantageous Effects of Invention

According to the ventilation device of the present invention, an effect is obtained where it is possible to perform an operation that is less likely to cause a change in the indoor humidity by supplying an optimal amount of humidification to the air to be supplied at the time of introducing the outside air by ventilation.

### Brief Description of Drawings

FIG. 1 is a top perspective view illustrating a configuration of a ventilation device according to a first example not being part of the present invention.
FIG. 2 is a flowchart illustrating an operation flow of the ventilation device.
FIG. 3 is a flowchart illustrating a flow of initial determination control.
FIG. 4 is a flowchart illustrating an operation flow in steady operation control.
FIG. 5 is a time chart illustrating an example of an operation of the ventilation device according to the first example not being part of the present invention.
FIG. 6 is a system diagram illustrating a configuration of a ventilation device according to a second embodiment and air conditioners.
FIG. 7 is a diagram illustrating a method for varying a cooling-operation-combining target indoor relative humidity RHm_rei in the ventilation device according to the second embodiment.
FIG. 8 is a flowchart illustrating an operation flow of the ventilation device according to the second embodiment.
FIG. 9 is a time chart illustrating an example of an operation of the ventilation device according to the second embodiment.

### Description of Embodiments

Exemplary embodiments of a ventilation device according to the present invention will be described below in detail with reference to the accompanying drawings. The present invention is not limited to the embodiments.

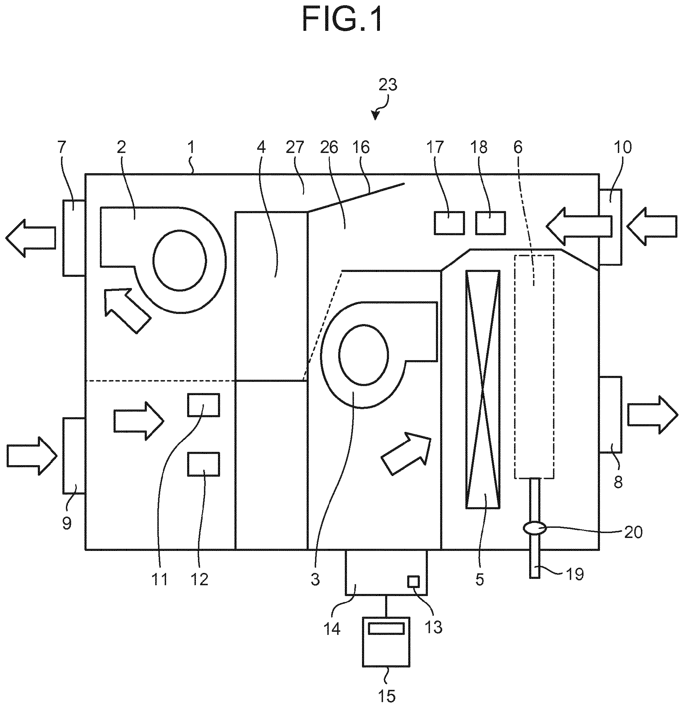

First example not being part of the invention. FIG. 1 is a top perspective view illustrating a configuration of a ventilation device according to a first example not being part of the present invention. A ventilation device 23 includes a body casing 1, an exhaust blower 2, an air-supply blower 3, a total heat exchanger 4, a temperature regulating coil 5, a humidifying element 6, an exhaust outlet 7, an air-supply outlet 8, an air-supply inlet 9, an exhaust inlet 10, an outside-air temperature sensor 11, an outside-air humidity sensor 12, a target indoor-humidity storage unit 13, a control unit 14, a remote controller 15, an air-passage switching damper 16, an indoor temperature sensor 17, and an indoor humidity sensor 18.

In the ventilation device 23, the air-supply outlet 8 and the exhaust inlet 10 are provided on the indoor side. On the outdoor side, the exhaust outlet 7 and the air-supply inlet 9 are provided. The ventilation device 23 has a box structure, and is covered with the body casing 1. In the body casing 1, an air-supply passage that communicates the air-supply inlet 9 on the outdoor side with the air-supply outlet 8 on the indoor side, and an exhaust passage that communicates the exhaust inlet 10 on the indoor side with the exhaust outlet 7 on the outdoor side, are formed.

The air-supply blower 3 is incorporated in the air-supply passage to form a supplied-air flow. The exhaust blower 2 is incorporated in the exhaust passage to form an exhaust-air flow. The total heat exchanger 4 is located between the air-supply passage and the exhaust passage. The total heat exchanger 4 continuously performs total heat exchange between a supplied-air flow and an exhaust-air flow to convert the outdoor air to the air to be supplied, and convert the indoor air to the air to be exhausted. On the windward side of the air-supply outlet 8 within the air-supply passage, the humidifying element 6 is provided. Between the air-supply blower 3 and the humidifying element 6, there is provided the temperature regulating coil 5 that heats the air to be supplied, and adjusts the amount of humidification. A water supply pipe 19 is connected to the humidifying element 6. During the humidifying operation, a water supply valve 20 is opened to supply water for humidification through the water supply pipe 19 to the humidifying element 6.

A primary-side air passage through which an exhaust-air flow passes, and a secondary-side air passage through which a supplied-air flow passes, cross at a right angle inside the total heat exchanger 4. Owing to this structure, the total heat is exchanged between a supplied-air flow and an exhaust-air flow, and therefore the total heat exchanger 4 can perform heat-exchange ventilation.

On the windward side of the total heat exchanger 4 within the exhaust passage, the air-passage switching damper 16 is provided. The air-passage switching damper 16 switches between an air passage 26 through which the air to be exhausted is delivered to the total heat exchanger 4, and a bypass air passage 27 through which the air to be exhausted is delivered directly to the exhaust blower 2 not through the total heat exchanger 4. When the air-passage switching damper 16 is closed, the indoor air passes through the total heat exchanger 4, and total heat exchange between the indoor air and the outdoor air is continuously performed. When the air-passage switching damper 16 is opened, the indoor air passes through the bypass air passage 27 provided beside the total heat exchanger 4, and is then converted to the air to be exhausted, and discharged outdoors by the exhaust blower 2.

When an outside-air temperature Toa is lower than the indoor temperature such as in the transitional season, the ventilation device 23 operates in such a manner as to open the air-passage switching damper 16 to deliver the indoor air to the bypass air passage 27 in order to perform cooling with the outside air by bypass ventilation. In the summer and winter season such as when an air conditioning load is generated, the ventilation device 23 operates in such a manner as to close the air-passage switching damper 16 to deliver the indoor air to the total heat exchanger 4 in order to perform total heat-exchange ventilation intended for the indoor-air heat recovery.

The control unit 14 controls the ventilation operation. The remote controller 15 receives a switching operation of operating modes and the like. The target indoor-humidity storage unit 13 has a target value of the indoor humidity stored therein.

The outside-air temperature sensor 11 measures the outside-air temperature Toa. The outside-air humidity sensor 12 measures an outside-air humidity RHoa. The outside-air temperature sensor 11 and the outside-air humidity sensor 12 are provided between the air-supply inlet 9 and the total heat exchanger 4. The indoor temperature sensor 17 measures an actual indoor temperature Tra, that is, the temperature in the room. The indoor humidity sensor 18 measures an actual indoor humidity RHra, that is, the humidity in the room. The indoor temperature sensor 17 and the indoor humidity sensor 18 are provided between the exhaust inlet 10 and the total heat exchanger 4.

The control unit 14 determines the heating capacity of the temperature regulating coil 5 based on the temperature information that is a measurement result of the outside-air temperature Toa measured by the outside-air temperature sensor 11, and based on the humidity information that is a measurement result of the outside-air humidity RHoa measured by the outside-air humidity sensor 12. The air having passed through the total heat exchanger 4 is heated by the temperature regulating coil 5. The air, having been heated by the temperature regulating coil 5, passes through the humidifying element 6, and is humidified, and then supplied from the air-supply outlet 8 to the interior of the room. At this time, the amount of humidification and the discharge-air temperature are adjusted by the heating amount in the temperature regulating coil 5.

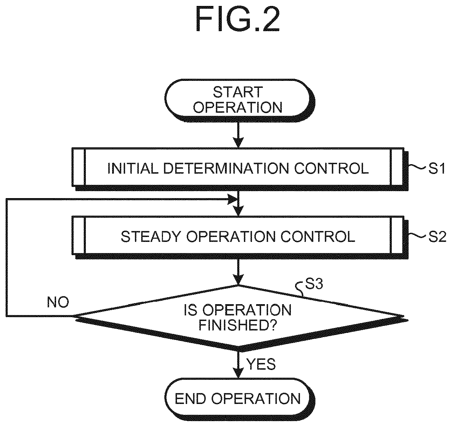

FIG. 2 is a flowchart illustrating an operation flow of the ventilation device. After the start of operation, the control unit 14 executes initial determination control for determining the initial operation state (Step S1). Thereafter, the control unit 14 shifts to steady operation control (Step S2). When there is no operation to finish the device operation (NO at Step S3), the control unit 14 continues the steady operation control. When there is an operation to finish the device operation (YES at Step S3), the control unit 14 finishes the operation of the ventilation device 23.

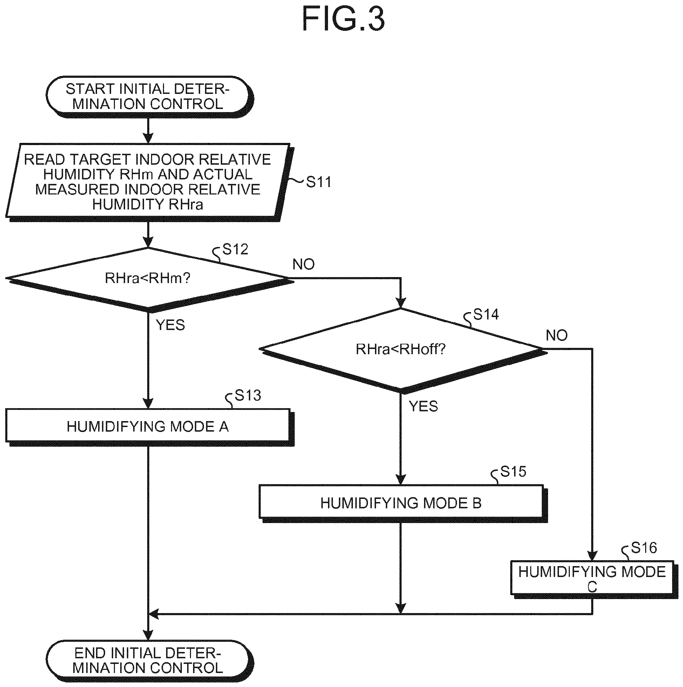

FIG. 3 is a flowchart illustrating a flow of initial determination control. Initially, the control unit 14 reads an actual measured indoor relative humidity RHra, and a target indoor relative humidity RHm (Step S11). Next, the control unit 14 compares the actual measured indoor relative humidity RHra with the target indoor relative humidity RHm (Step S12). When the actual measured indoor relative humidity RHra is lower than the target indoor relative humidity RHm (YES at Step S12), the control unit 14 operates the ventilation device 23 in a humidifying mode A (Step S13). In the humidifying mode A, in order to rapidly increase the amount of humidification to the room to ensure the comfort, the control unit 14 controls the temperature regulating coil 5 such that the humidification capacity becomes 100%.

When the actual measured indoor relative humidity RHra is equal to or higher than the target indoor relative humidity RHm (NO at Step S12), the control unit 14 determines whether the air in the room is in an excessively-humidified state (Step S14). The determination of whether the air in the room is in an excessively-humidified state is performed based on whether the actual measured indoor relative humidity RHra is lower than a thermo-off humidity RHoff. When the actual measured indoor relative humidity RHra is lower than the thermo-off humidity RHoff, it is determined that the air in the room is not in an excessively-humidified state. In order to prevent chattering, it is appropriate to set the thermo-off humidity RHoff to a value that is approximately 5% higher than the target indoor relative humidity RHm.

When the air in the room is not in an excessively-humidified state (YES at Step S14), the control unit 14 operates the ventilation device 23 in a humidifying mode B (Step S15). In the humidifying mode B, in order to maintain a constant indoor humidity, the control unit 14 automatically determines the capacity of the temperature regulating coil 5, at which the humidity of the air supplied from the ventilation device 23 reaches the target indoor relative humidity RHm, based on the outside-air temperature Toa and the outside-air humidity RHoa. Reference data, in which a combination of the outside-air temperature Toa and the outside-air humidity RHoa is brought into correspondence with the capacity value of the temperature regulating coil 5, that is a so-called map, is held in the control unit 14. Based on the map, the control unit 14 determines the capacity value of the temperature regulating coil 5.

When the air in the room is in an excessively-humidified state, that is, when the actual measured indoor relative humidity RHra is equal to or higher than the thermo-off humidity RHoff (NO at Step S14), the control unit 14 operates the ventilation device 23 in a humidifying mode C (Step S16). In the humidifying mode C, it is not necessary to promote humidification by using the temperature regulating coil 5, but it is necessary to suppress condensation caused by excessively humidifying the air in the room. Therefore, the control unit 14 sets the operation capacity of the temperature regulating coil 5 to 0%, that is, brings the ventilation device 23 into a thermo-off state to stop its humidifying operation.

In the humidifying mode C, it is possible to stop heating in the temperature regulating coil 5, and stop a water supply to the humidifying element 6, to immediately return the indoor air from the excessively-humidified state to the target indoor relative humidity RHm that is a comfortable humidity. Further, by not stopping a water supply to the humidifying element 6 while setting the operation capacity of the temperature regulating coil 5 to 0%, such an operation may be performed that can suppress an abrupt decrease in humidity due to ventilation during the steady operation and maintains a high-humidity state at a constant value for a long time.

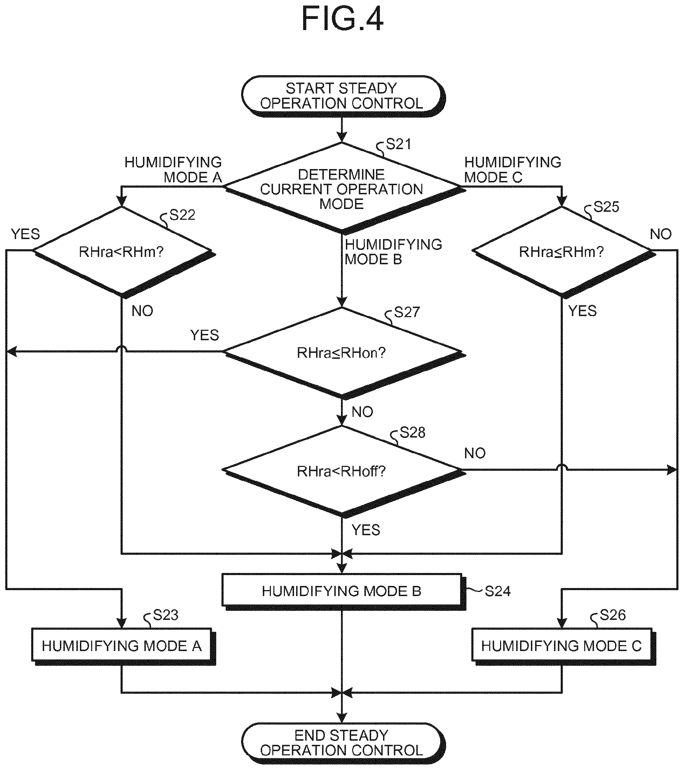

FIG. 4 is a flowchart illustrating an operation flow in steady operation control. First, the control unit 14 confirms which humidifying modes the current humidifying mode is in (Step S21). When the current humidifying mode is the humidifying mode A (the humidifying mode A at Step S21), the control unit 14 determines whether the actual measured indoor relative humidity RHra remains lower than the target indoor relative humidity RHm (Step S22). When the actual measured indoor relative humidity RHra is lower than the target indoor relative humidity RHm (YES at Step S22), the control unit 14 causes the ventilation device 23 to continue the operation in the humidifying mode A in order to continue to increase the indoor humidity (Step S23). In contrast, when the actual measured indoor relative humidity RHra is equal to or higher than the target indoor relative humidity RHm (NO at Step S22), the control unit 14 causes the ventilation device 23 to shift to the humidifying mode B (Step S24). Owing to this control, while monitoring the outside-air temperature Toa and the outside-air humidity RHoa, the temperature regulating coil 5 is operated at an optimal coil-capacity value, and the humidifying operation of the ventilation device 23 is continued.

When the current humidifying mode is the humidifying mode C (the humidifying mode C at Step S21), the control unit 14 determines whether the actual measured indoor relative humidity RHra is equal to or lower than the target indoor relative humidity RHm (Step S25). When the actual measured indoor relative humidity RHra exceeds the target indoor relative humidity RHm (NO at Step S25), the control unit 14 causes the ventilation device 23 to continue the operation in the humidifying mode C (Step S26). When the actual measured indoor relative humidity RHra is decreased by ventilation, and then becomes equal to or lower than the target indoor relative humidity RHm (YES at Step S25), the control unit 14 causes the ventilation device 23 to shift to the humidifying mode B (Step S24).

When the current humidifying mode is the humidifying mode B (the humidifying mode B at Step S21), the control unit 14 determines whether the actual measured indoor relative humidity RHra is equal to or lower than an unlimited-capacity return humidity RHon (Step S27). When the actual measured indoor relative humidity RHra is equal to or lower than the unlimited-capacity return humidity RHon (YES at Step S27), the control unit 14 causes the ventilation device 23 to shift to the humidifying mode A (Step S23). In order to prevent chattering, it is appropriate to set the unlimited-capacity return humidity RHon to a value that is approximately 5% lower than the target indoor relative humidity RHm.

When the actual measured indoor relative humidity RHra is higher than the unlimited-capacity return humidity RHon (NO at Step S27), the control unit 14 determines whether the actual measured indoor relative humidity RHra is lower than the thermo-off humidity RHoff (Step S28). When the actual measured indoor relative humidity RHra is equal to or higher than the thermo-off humidity RHoff (NO at Step S28), the control unit 14 causes the ventilation device 23 to shift to the humidifying mode C (Step S26). When the actual measured indoor relative humidity RHra is lower than the thermo-off humidity RHoff (YES at Step S28), the control unit 14 maintains the operation of the ventilation device 23 in the humidifying mode B (Step S24).

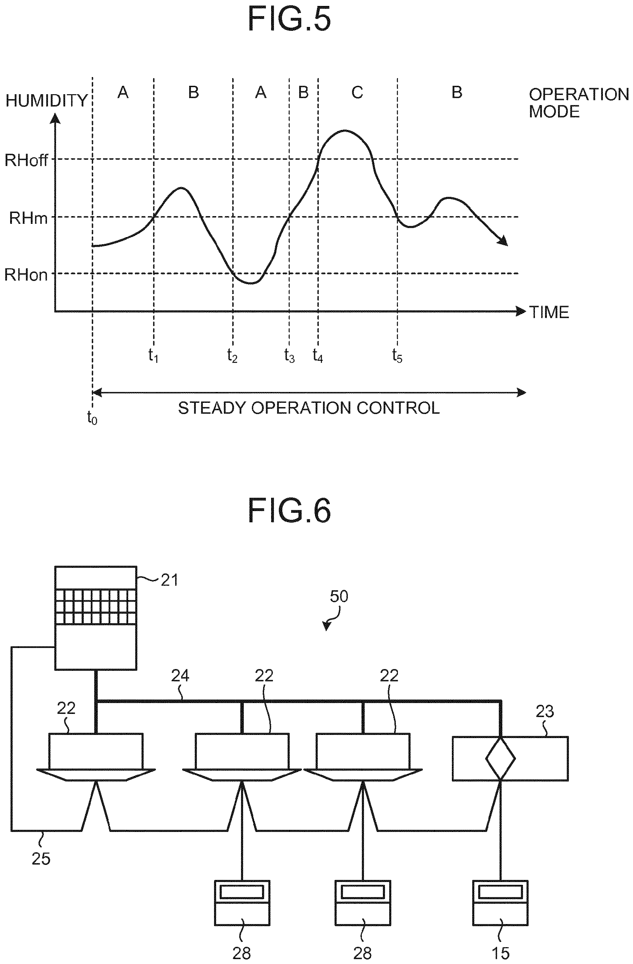

FIG. 5 is a time chart illustrating an example of an operation of the ventilation device according to the first embodiment. At the time t0, the control unit 14 executes initial determination control. Because the actual measured indoor relative humidity RHra is lower than the target indoor relative humidity RHm, the control unit 14 causes the ventilation device 23 to start the humidifying operation in the humidifying mode A.

At the time t1, because the actual measured indoor relative humidity RHra reaches equal to or higher than the target indoor relative humidity RHm, the control unit 14 causes the ventilation device 23 to shift from the humidifying mode A to the humidifying mode B.

At the time t2, because the actual measured indoor relative humidity RHra reaches equal to or lower than the unlimited-capacity return humidity RHon, the control unit 14 causes the ventilation device 23 to shift from the humidifying mode B to the humidifying mode A.

At the time t3, because the actual measured indoor relative humidity RHra reaches equal to or higher than the target indoor relative humidity RHm, the control unit 14 causes the ventilation device 23 to shift from the humidifying mode A to the humidifying mode B.

At the time t4, because the actual measured indoor relative humidity RHra reaches equal to or higher than the thermo-off humidity RHoff, the control unit 14 causes the ventilation device 23 to shift from the humidifying mode B to the humidifying mode C.

At the time t5, because the actual measured indoor relative humidity RHra reaches equal to or lower than the target indoor relative humidity RHm, the control unit 14 causes the ventilation device 23 to shift from the humidifying mode C to the humidifying mode B.

In the case where the current humidifying mode is the humidifying mode B, as the outside-air humidity RHoa to be introduced increases, the indoor humidity may also increase. Therefore, in the above control, when the actual measured indoor relative humidity RHra increases to the thermo-off humidity RHoff, the humidifying mode of the ventilation device 23 is switched from the humidifying mode B to the humidifying mode C.

In the case where the current humidifying mode is the humidifying mode B, when the outside-air humidity RHoa to be introduced decreases, the humidification capacity cannot keep up with the lower outside-air humidity RHoa, and therefore the actual measured indoor relative humidity RHra may decrease. Therefore, in the above control, when the actual measured indoor relative humidity RHra becomes equal to or lower than the unlimited-capacity return humidity RHon, the humidifying mode of the ventilation device 23 is switched from the humidifying mode B to the humidifying mode A. Owing to this control, an operation with the maximized amount of humidification is performed to increase the indoor humidity as quickly as possible.

When the actual measured indoor relative humidity RHra is between the unlimited-capacity return humidity RHon and the thermo-off humidity RHoff, the control unit 14 determines that the indoor humidity falls within the target range, and causes the ventilation device 23 to continue the energy-efficient humidifying operation in the humidifying mode B.

In the above control, the target indoor relative humidity RHm and the actual measured indoor relative humidity RHra are measured and determined based on the relative humidity. However, when the temperature at the measurement location is high, this may result in an unintentional decrease in the relative humidity. In this case, an absolute humidity AHra may be calculated from the actual measured indoor temperature TRa and the actual measured indoor relative humidity RHra, and the calculated absolute humidity AHra may be compared with a target absolute humidity.

As described above, according to the first embodiment, the capacity value of the temperature regulating coil is determined based on the target indoor relative humidity RHm, the actual measured indoor relative humidity RHra, the outside-air temperature Toa, and the outside-air humidity RHoa, and the humidification operation is performed while suppressing the heating capacity. Owing to this operation, while maintaining a constant humidity in the room, when the actual measured indoor relative humidity RHra deviates from the target indoor relative humidity RHm, the humidifying mode is switched and the actual measured indoor relative humidity RHra can be made closer to the target indoor relative humidity RHm as quickly as possible. This can improve the comfort in a shorter time.

### Second embodiment.

A ventilation device according to a second embodiment has the same configuration as in the first embodiment. However, when the ventilation device is used in combination with an air conditioner, the target indoor relative humidity RHm for the ventilation device is changed based on the operation of the air conditioner. FIG. 6 is a system diagram illustrating a configuration of the ventilation device according to the second embodiment and air conditioners.

Air conditioners 22 and the ventilation device 23 along with an outdoor device 21 constitute an air conditioning system 50, and are connected to each other by a refrigerant pipe 24 and a communication line 25. The outdoor device 21 includes a pump that delivers a refrigerant to the refrigerant pipe 24. The outdoor device 21 further includes a fin that radiates heat absorbed by the refrigerant during the cooling operation in the air conditioners 22 and the ventilation device 23. Some of the air conditioners 22 include a remote controller 28. An operation such as switching between on and off of the device operation, or switching over the operation mode, is performed through the remote controller 28.

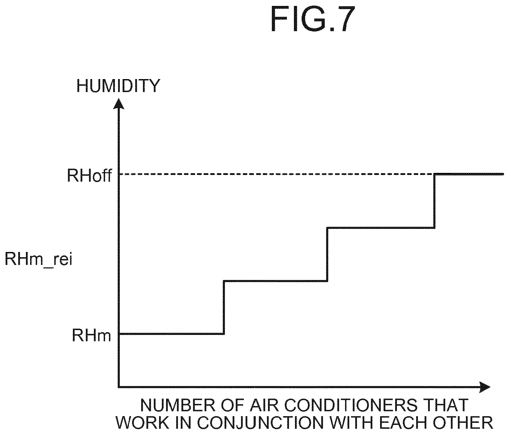

As a target indoor relative humidity to be used when the air conditioners 22 that constitute the air conditioning system 50 perform a cooling operation during a heating and humidifying operation, a cooling-operation-combining target indoor relative humidity RHm_rei is set in the control unit 14. The cooling-combining target indoor relative humidity RHm_rei is set to a value between a normal target indoor relative humidity RHm and the thermo-off humidity RHoff. It is also possible that the cooling-combining target indoor relative humidity RHm_rei is set to a fixed value, or a value that varies according to the number of air conditioners that work in conjunction with each other. FIG. 7 is a diagram illustrating a method for varying the cooling-operation-combining target indoor relative humidity RHm_rei in the ventilation device according to the second embodiment. It is also possible that the value of the cooling-operation-combining target indoor relative humidity RHm_rei is set so as to become larger each time the number of the air conditioners 22 that work in conjunction with each other increases by 1, or is set so as to become larger each time the number of the air conditioners 22 that work in conjunction with each other increases by 2 or more.

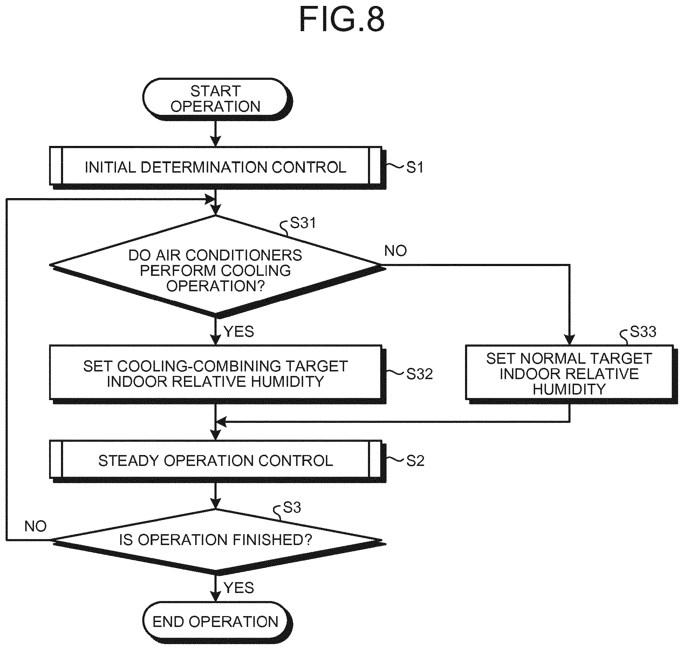

FIG. 8 is a flowchart illustrating an operation flow of the ventilation device according to the second embodiment. The operation in initial determination control (Step S1) is as described in the first embodiment. After the initial determination control, the control unit 14 determines whether the air conditioners 22 that constitute the air conditioning system 50 perform a cooling operation during a heating and humidifying operation (Step S31). When the air conditioners 22 perform a cooling operation (YES at Step S31), the control unit 14 changes the target indoor relative humidity RHm from a normal value to the cooling-combining target indoor relative humidity RHm_rei, in order to prevent a decrease in humidity due to a cooling and dehumidifying operation (Step S32). When the air conditioners 22 that constitute the air conditioning system 50 stop the operation, or operate in an operation mode other than the cooling-operation mode (NO at Step S31), this does not cause a decrease in humidity due to cooling and dehumidification. Therefore, the control unit 14 sets the target indoor relative humidity for the ventilation device 23 to the normal value of the target indoor relative humidity RHm (Step S33).

Thereafter, a steady operation control is executed (Step S2). The operation in the steady operation control is as described in the first embodiment. After the steady operation control, when there is no operation to finish the device operation (NO at Step S3), it is returned to Step S31 and it is determined whether the air conditioners 22 that constitute the air conditioning system 50 perform a cooling operation. When there is an operation to finish the device operation (YES at Step S3), the operation is finished.

As described above, when the air conditioners 22 do not perform a cooling operation, the normal value of the target indoor relative humidity RHm is set as a target indoor relative humidity, and therefore an energy-efficient humidifying operation is performed with the reduced capacity of the temperature regulating coil 5.

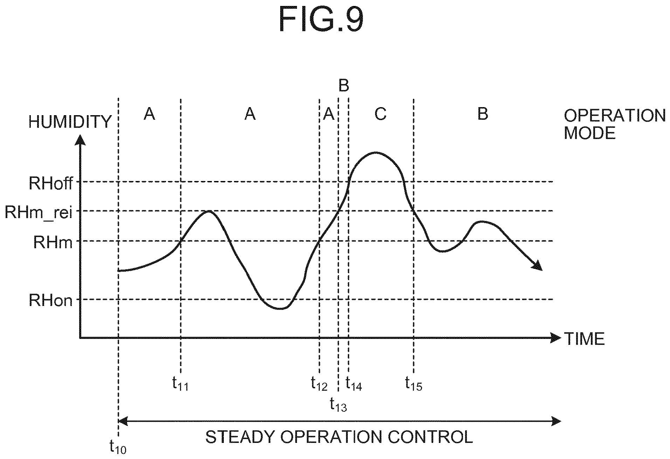

FIG. 9 is a time chart illustrating an example of an operation of the ventilation device according to the second embodiment. At the time t10, the control unit 14 executes the initial determination control, and causes the ventilation device 23 to start the operation in the humidifying mode A.

At the time t11, the actual measured indoor relative humidity RHra becomes equal to or higher than a normal target indoor relative humidity RHm, but does not become equal to or higher than the cooling-combining target indoor relative humidity RHm_rei. Therefore, the control unit 14 causes the ventilation device 23 to maintain the operation in the humidifying mode A.

At the time t12, the actual measured indoor relative humidity RHra becomes equal to or higher than the normal target indoor relative humidity RHm, but does not become equal to or higher than the cooling-combining target indoor relative humidity RHm_rei. Therefore, the control unit 14 causes the ventilation device 23 to maintain the operation in the humidifying mode A.

At the time t13, because the actual measured indoor relative humidity RHra becomes equal to or higher than the cooling-combining target indoor relative humidity RHm_rei, the control unit 14 causes the ventilation device 23 to shift from the humidifying mode A to the humidifying mode B.

At the time t14, because the actual measured indoor relative humidity RHra exceeds the thermo-off humidity RHoff, the control unit 14 causes the ventilation device 23 to shift from the humidifying mode B to the humidifying mode C.

At the time t15, because the actual measured indoor relative humidity RHra becomes equal to or lower than the cooling-combining target indoor relative humidity RHm_rei, the control unit 14 causes the ventilation device 23 to shift from the humidifying mode C to the humidifying mode B.

Based on whether the air conditioners 22 perform a cooling operation, the control unit 14 switches between the normal target indoor relative humidity RHm and the cooling-combining target indoor relative humidity RHm_rei, and therefore can extend the area of the humidifying mode A in which the temperature regulating coil 5 operates at the capacity value of 100%. This makes it possible to suppress the decrease in humidity caused by dehumidification by the air conditioners 22.

In the case where the refrigerant-evaporating temperature in the air conditioners 22 is variable, when the refrigerant evaporating temperature is high, the air conditioners 22 can only manage sensible heat in the air, that is, the temperature, and are capable of performing a cooling operation without managing latent heat, that is, without dehumidification. Therefore, it is also possible that when the outdoor device 21 determines that the air conditioners 22 are operating at a refrigerant evaporating temperature ETk for managing only sensible heat, which is higher than a refrigerant evaporating temperature ET in a normal cooling operation, then the cooling-combining target indoor relative humidity RHm_rei is changed. As long as the air conditioners 22 perform a cooling operation at the refrigerant evaporating temperature ETk for managing only sensible heat, or higher, a concern for the decrease in indoor humidity is eliminated. Therefore, it is not necessary for the ventilation device 23 to change the target indoor relative humidity from the normal target indoor relative humidity RHm.

When the refrigerant evaporating temperature in the air conditioners 22 becomes lower than the refrigerant evaporating temperature ETk for managing only sensible heat, the amount of dehumidification by the air conditioners 22 is increased. This creates a concern for the decrease in indoor humidity due to the cooling operation. Therefore, the target indoor relative humidity is set to the cooling-combining target indoor relative humidity RHm_rei. The target indoor relative humidity is increased from the normal value as infrequently as possible, and this makes it possible to perform an energy-efficient operation with the reduced capacity of the temperature regulating coil 5.

Further, it is also possible that the number of the air conditioners 22 that are performing a cooling operation is counted, and only when the amount of dehumidification in the air conditioners 22 exceeds the amount of humidification in the ventilation device 23, the target indoor relative humidity RHm is increased.

As described above, in the case where the ventilation device 23 is used in combination with the air conditioners 22, the target indoor relative humidity RHm for the ventilation device 23 is changed based on the cooling-operation information and the refrigerant evaporating temperature information. This makes it possible to prevent the decrease in indoor humidity, and therefore to improve the comfort in the room.

In the present embodiment, when the target indoor relative humidity RHm is higher than the actual measured indoor relative humidity RHra measured by the indoor humidity sensor 18, the control unit 14 decides the heating capacity of the temperature regulating coil 5, such that the humidity of the supplied air becomes the target indoor relative humidity RHm, based on the measurement values of the outside-air temperature sensor 11 and the outside-air humidity sensor 12. Therefore, the ventilation device 23 supplies an optimum amount of humidification at the time of introducing the outside air by ventilation, and can achieve a heating and humidifying operation that is less likely to cause a change in the indoor humidity.

### Industrial Applicability

As described above, the ventilation device according to the present invention is useful in that the ventilation device that humidifies the outside air, and that introduces the humidified air into a room, changes the amount of humidification relative to a target indoor humidity, and maintains a comfortable indoor humidity. Particularly, the ventilation device according to the present invention is suitable when a separate air conditioner is provided in a room to constitute an air conditioning system along with this ventilation device.

### Reference Signs List

1 body casing, 2 exhaust blower, 3 air-supply blower, 4 total heat exchanger, 5 temperature regulating coil, 6 humidifying element, 7 exhaust outlet, 8 air-supply outlet, 9 air-supply inlet, 10 exhaust inlet, 11 outside-air temperature sensor, 12 outside-air humidity sensor, 13 target indoor-humidity storage unit, 14
control unit, 15, 28 remote controller, 16 air-passage switching damper, 17 indoor temperature sensor, 18 indoor humidity sensor, 19 water supply pipe, 20 water supply valve, 23 ventilation device, 24 refrigerant pipe, 25 communication line, 26 air passage, 27 bypass air passage, 50 air conditioning system.

## Claims

1. A ventilation device (23) for an air conditioning system, wherein the air conditioning system also includes, in addition to the ventilation device, air conditioners providing air conditioning to a room, the ventilation device comprising:
a casing (1) that includes an air-supply passage and an exhaust passage;
an air-supply blower (3) that is provided in the air-supply passage, and that is configured to blow outdoor air into the air-supply passage to form a supplied-air flow in the room;
an exhaust blower (2) that is provided in the exhaust passage, and that is configured to blow indoor air into the exhaust passage to form an exhaust-air flow to be discharged outside the room;
a total heat exchanger (4) that is located between the air-supply passage and the exhaust passage, and accommodated in the casing (1), and that is configured to perform total heat exchange between the supplied-air flow and the exhaust-air flow;
an outside-air temperature sensor (11) for measuring a temperature of the outdoor air;
an outside-air humidity sensor (12) for measuring a humidity of the outdoor air;
an indoor humidity sensor (18) for measuring a humidity of the indoor air;
a temperature regulating coil (5) that is capable of changing a heating capacity at multiple stages, and that heats the supplied-air flow after having undergone total heat exchange by the total heat exchanger (4);
a humidifying element (6) that is configured to humidify a supplied-air flow heated by the temperature regulating coil (5);
a target indoor-humidity storage unit (13) that is configured to store therein a target indoor humidity that is a target value of a humidity of the indoor air; and
a control unit (14);
wherein the control unit is configured to determine a heating capacity of the temperature regulating coil (5), such that a humidity of the supplied-air flow becomes the target indoor humidity, based on measurement values of the outside-air temperature sensor (11) and the outside-air humidity sensor (12) when an actual measurement value of a humidity of the indoor air measured by the indoor humidity sensor (18) is equal to or higher than the target indoor humidity the ventilation device being **characterized in that**:
the control unit (14) is configured to change the target indoor humidity based on number of the air conditioners (22) in the air conditioning system (50), which are performing a cooling operation, or
the control unit (14) is configured to change the target indoor humidity based on a refrigerant evaporating temperature in the air conditioners (22).

2. The ventilation device (23) according to claim 1, wherein the control unit (14) stores therein reference data that defines the heating capacity to each combination of a temperature and a humidity of the outside air, and is configured to determine a heating capacity of the temperature regulating coil (5) based the reference data and outside-air temperature and humidity sensor measurement results.

3. The ventilation device (23) according to claim 1, wherein when an actual measurement value of a humidity of the indoor air is lower than the target indoor humidity, the control unit (14) sets a capacity value of the temperature regulating coil (5) to 100%.

4. The ventilation device (23) according to claim 1, wherein when the indoor air is in an excessively-humidified state, the control unit (14) is configured to cause the temperature regulating coil (5) to stop heating the supplied-air flow.

5. The ventilation device (23) according to claim 1, wherein
the target indoor-humidity storage unit (13) stores therein the target indoor humidity as an absolute humidity, and
the control unit (14) is configured to calculate an absolute humidity of the outdoor air based on an actual measurement value of a temperature of the outdoor air measured by the outside-air temperature sensor (11), and based on an actual measurement value of a humidity of the outdoor air measured by the outside-air humidity sensor (12), and when the target indoor humidity is higher than the calculated absolute humidity,
the control unit (14) is configured to determine a heating capacity of the temperature regulating coil (5), such that a humidity of the supplied-air flow becomes the target indoor humidity, based on measurement values of the outside-air temperature sensor (11) and the outside-air humidity sensor (12).

## Patentansprüche

1. Belüftungseinrichtung (23) für ein Klimatisierungssystem, wobei das Klimatisierungssystem, zusätzlich zu der Belüftungseinrichtung, auch Klimaanlagen umfasst, die eine Klimatisierung für einen Raum bereitstellen, wobei die Belüftungseinrichtung umfasst:
ein Gehäuse (1), das einen Zuluftdurchlass und einen Abluftdurchlass umfasst;
ein Zuluftgebläse (3), das in dem Zuluftdurchlass vorgesehen ist, und das eingerichtet ist, Außenluft in den Zuluftdurchlass zu blasen, um in dem Raum eine Zuluftströmung zu bilden;
ein Abluftgebläse (2), das in dem Abluftdurchlass vorgesehen ist und das eingerichtet ist, Innenraumluft in den Abluftdurchlass zu blasen, um eine Abluftströmung zu bilden, die aus dem Raum abzuführen ist;
einen Gesamtwärmetauscher (4), der zwischen dem Zuluftdurchlass und dem Abluftdurchlass angeordnet ist, und in dem Gehäuse (1) untergebracht ist, und der eingerichtet ist, einen Gesamtwärmeaustausch zwischen der Zuluftströmung und der Abluftströmung durchzuführen;
einen Außenlufttemperatursensor (11) zum Messen einer Temperatur der Außenluft;
einen Außenluft-Feuchtigkeitssensor (12) zum Messen einer Feuchtigkeit der Außenluft;
einen Innenraum-Feuchtigkeitssensor (18) zum Messen einer Feuchtigkeit der Innenraumluft;
eine Temperaturregelwendel (5), die in der Lage ist, eine Erwärmungskapazität in mehreren Stufen zu verändern, und die die Zuluftströmung erwärmt, nachdem diese einem Gesamtwärmeaustausch durch den Gesamtwärmetauscher (4) unterzogen wurde;
ein Befeuchtungselement (6), das eingerichtet ist, eine durch die Temperaturregelwendel (5) erwärmte Zuluftströmung zu befeuchten;
eine Ziel-Innenraumfeuchtigkeit-Speichereinheit (13), die eingerichtet ist, eine Ziel-Innenraumfeuchtigkeit, die ein Zielwert einer Feuchtigkeit der Innenraumluft ist, darin zu speichern; und
eine Steuereinheit (14);
wobei die Steuereinheit eingerichtet ist, eine Erwärmungskapazität der Temperaturregelwendel (5) zu bestimmen, so dass eine Feuchtigkeit der Zuluftströmung auf Grundlage von Messwerten des Außenluft-Temperatursensors (11) und des Außenluft-Feuchtigkeitssensors (12) die Ziel-Innenraumfeuchtigkeit wird, wenn ein aktueller Messwert einer durch den Innenraum-Feuchtigkeitssensor (18) gemessenen Feuchtigkeit der Innenraumluft gleich ist wie oder höher ist als die Ziel-Innenraumfeuchtigkeit, wobei die Belüftungseinrichtung **dadurch gekennzeichnet ist, dass**:
die Steuereinheit (14) eingerichtet ist, die Ziel-Innenraumfeuchtigkeit auf Grundlage der Anzahl der Klimaanlagen (22) in dem Klimatisierungssystem (50), die einen Kühlbetrieb durchführen, zu verändern, oder
die Steuereinheit (14) eingerichtet ist, die Ziel-Innenraumfeuchtigkeit auf Grundlage einer Kältemittelverdampfungstemperatur in den Klimaanlagen (22) zu verändern.

2. Belüftungseinrichtung (23) nach Anspruch 1, wobei die Steuereinheit (14) Referenzdaten darin speichert, die die Erwärmungskapazität zu jeder Kombination aus einer Temperatur und einer Feuchtigkeit der Außenluft definiert, und eingerichtet ist, eine Erwärmungskapazität der Temperaturregelwendel (5) auf Grundlage der Referenzdaten und Messergebnisse des Außenluft-Temperatursensors und Feuchtigkeitssensors zu bestimmen.

3. Belüftungseinrichtung (23) nach Anspruch 1, wobei, wenn ein aktueller Messwert einer Feuchtigkeit der Innenraumluft niedriger ist als die Ziel-Innenraumfeuchtigkeit, die Steuereinheit (14) einen Kapazitätswert der Temperaturregelwendel (5) auf 100 % setzt.

4. Belüftungseinrichtung (23) nach Anspruch 1, wobei, wenn sich die Innenraumluft in einem übermäßig befeuchteten Zustand befindet, die Steuereinheit (14) eingerichtet ist, die Temperaturregelwendel (5) zu veranlassen, eine Erwärmung der Zuluftströmung zu stoppen.

5. Belüftungseinrichtung (23) nach Anspruch 1, wobei
die Ziel-Innenraumfeuchtigkeit-Speichereinheit (13) die Ziel-Innenraumfeuchtigkeit als eine absolute Feuchtigkeit darin speichert, und
die Steuereinheit (14) eingerichtet ist, eine absolute Feuchtigkeit der Außenluft auf Grundlage eines aktuellen Messwerts einer Temperatur der Außenluft, die durch den Außenluft-Temperatursensor (11) gemessen wird, und auf Grundlage eines aktuellen Messwerts einer Feuchtigkeit der Außenluft, die durch den Außenluft-Feuchtigkeitssensor (12) gemessen wird, zu berechnen, und wenn die Ziel-Innenraumfeuchtigkeit höher ist als die berechnete absolute Feuchtigkeit, die Steuereinheit (14) eingerichtet ist, eine Erwärmungskapazität der Temperaturregelwendel (5) auf Grundlage von Messwerten des Außenluft-Temperatursensors (11) und des Außenluft-Feuchtigkeitssensors (12) zu bestimmen, so dass eine Feuchtigkeit der Zuluftströmung die Ziel-Innenraumfeuchtigkeit wird.

## Revendications

1. Dispositif de ventilation (23) pour un système de climatisation, dans lequel le système de climatisation comprend également, en plus du dispositif de ventilation, des climatiseurs fournissant une climatisation à une pièce, le dispositif de ventilation comprenant :
une carrosserie (1) qui comprend un passage d'alimentation en air et un passage d'évacuation ;
un souffleur d'alimentation en air (3) qui est agencé dans le passage d'alimentation en air, et qui est conçu pour souffler de l'air extérieur dans le passage d'alimentation en air pour former un flux d'air acheminé dans la pièce ;
un souffleur d'évacuation (2) qui est agencé dans le passage d'évacuation, et qui est conçu pour souffler de l'air intérieur dans le passage d'évacuation pour former un flux d'air d'évacuation à évacuer hors de la pièce ;
un échangeur de chaleur total (4) qui est situé entre le passage d'alimentation en air et le passage d'évacuation, et logé dans la carrosserie (1), et qui est conçu pour réaliser un échange de chaleur total entre le flux d'air acheminé et le flux d'air d'évacuation ;
un capteur de température d'air extérieur (11) pour mesurer une température de l'air extérieur ;
un capteur d'humidité d'air extérieur (12) pour mesurer une humidité de l'air extérieur ;
un capteur d'humidité intérieure (18) pour mesurer une humidité de l'air intérieur ;
une bobine d'ajustement de température (5) qui est capable de changer une capacité de chauffage à une pluralité de niveaux, et qui chauffe le flux d'air acheminé après un échange de chaleur total par l'échangeur de chaleur total (4) ;
un élément d'humidification (6) qui est conçu pour humidifier un flux d'air acheminé chauffé par la bobine d'ajustement de température (5) ;
une unité de stockage d'humidité intérieure cible (13) qui est conçue pour stocker dans celle-ci une humidité intérieure cible qui est une valeur cible d'une humidité de l'air intérieur ; et
une unité de commande (14) ;
dans lequel l'unité de commande est conçue pour déterminer une capacité de chauffage de la bobine d'ajustement de température (5), de sorte qu'une humidité du flux d'air acheminé devient l'humidité intérieure cible, sur la base de valeurs de mesure du capteur de température d'air extérieur (11) et du capteur d'humidité d'air extérieur (12) lorsqu'une valeur de mesure réelle d'une humidité de l'air intérieur mesurée par le capteur d'humidité intérieure (18) est supérieure ou égale à l'humidité intérieure cible, le dispositif de ventilation étant **caractérisé en ce que** :
l'unité de commande (14) est configurée pour changer l'humidité intérieure cible sur la base du nombre des climatiseurs (22) dans le système de climatisation (50), qui réalisent une opération de refroidissement, ou
l'unité de commande (14) est configurée pour changer l'humidité intérieure cible sur la base d'une température d'évaporation de réfrigérant dans les climatiseurs (22).

2. Dispositif de ventilation (23) selon la revendication 1, dans lequel l'unité de commande (14) stocke dans celle-ci des données de référence qui définissent la capacité de chauffage pour chaque combinaison d'une température et d'une humidité de l'air extérieur, et est configurée pour déterminer une capacité de chauffage de la bobine d'ajustement de température (5) sur la base des données de référence et des résultats de mesure des capteurs de température et d'humidité d'air extérieur.

3. Dispositif de ventilation (23) selon la revendication 1, dans lequel lorsqu'une valeur de mesure réelle d'une humidité de l'air intérieur est inférieure à l'humidité intérieure cible, l'unité de commande (14) établit une valeur de capacité de la bobine d'ajustement de température (5) à 100 %.

4. Dispositif de ventilation (23) selon la revendication 1, dans lequel lorsque l'air intérieur se trouve dans un état excessivement humidifié, l'unité de commande (14) est conçue pour entraîner l'arrêt du chauffage du flux d'air acheminé par la bobine d'ajustement de température (5).

5. Dispositif de ventilation (23) selon la revendication 1, dans lequel
l'unité de stockage d'humidité intérieure cible (13) stocke dans celle-ci l'humidité intérieure cible comme une humidité absolue, et
l'unité de commande (14) est configurée pour calculer une humidité absolue de l'air extérieur sur la base d'une valeur de mesure réelle d'une température de l'air extérieur mesurée par le capteur de température d'air extérieur (11), et sur la base d'une valeur de mesure réelle d'une humidité de l'air extérieur mesurée par le capteur d'humidité d'air extérieur (12), et lorsque l'humidité intérieure cible est supérieure à l'humidité absolue calculée, l'unité de commande (14) est configurée pour déterminer une capacité de chauffage de la bobine d'ajustement de température (5), de sorte qu'une humidité du flux d'air acheminé devient l'humidité intérieure cible, sur la base de valeurs de mesure du capteur de température d'air extérieur (11) et du capteur d'humidité d'air extérieur (12).
